# FASCICULE DE BREVET EUROPEEN

(11) **EP 0 529 723 B1**
(45) Date de publication et mention de la délivrance du brevet: **28.06.1995**
(21) Numéro de dépôt: 92202558.0
(22) Date de dépôt: 21.08.1992
(51) Int. Cl.: C01B 15/013, C01B 15/023

(54) **Procédé pour l'obtention de solutions aqueuses de peroxyde d'hydrogène**
Verfahren zur Gewinnung von wässrigen Wasserstoff-Peroxidlösungen
Process for obtaining aqueous solutions of hydrogen peroxide

(30) Priorité: 27.08.1991 BE 9100788
(43) Date de publication de la demande: 03.03.1993
(73) Titulaire: SOLVAY INTEROX (Société Anonyme), B-1050 Bruxelles (BE)
(72) Inventeur: Signorini, Lido, B-1050 Bruxelles (BE); Glinos, Konstantin, B-1200 Bruxelles (BE); Deroisy, Philippe, B-1300 Wavre (BE); Banneux, Fabienne, B-7100 La Louviere (BE)
(74) Mandataire: Decamps, Alain René François

(56) Documents cités:
- EP-A- 0 032 338
- FR-A- 1 299 335
- FR-A- 1 412 812
- THE INDUSTRIAL CHEMIST vol. 35, Janvier 1959, pages 9 - 16 'A new process for hydrogen peroxide'

## Description

L'invention concerne un procédé pour la préparation de peroxyde d'hydrogène par la technique aux alkylanthraquinones. Plus particulièrement, l'invention s'adresse à fournir un procédé pour l'obtention de solutions aqueuses concentrées de peroxyde d'hydrogène à faibles teneurs en impuretés.

L'invention concerne aussi une installation pour l'obtention de solutions aqueuses concentrées de peroxyde d'hydrogène épurées en impuretés.

Il est bien connu (brevet européen EP-B1-0032338 au nom de OXYSYNTHESE) dans la synthèse organique de peroxyde d'hydrogène selon le procédé aux alkylanthraquinones d'injecter des stabilisants inorganiques à l'étape d'oxydation dans le but de prévenir la décomposition du peroxyde d'hydrogène produit. Les stabilisants ainsi ajoutés passent avec la solution organique de travail contenant l'H₂O₂ dans l'étape d'extraction. A cet endroit, on ajoute généralement via le courant d'eau alimentant la colonne d'extraction, une quantité supplémentaire de sels et/ou d'acides inorganiques agissant comme stabilisants via contrôle du pH ainsi que des inhibiteurs de corrosion. Ces stabilisants et acidifiants sont extraits avec l'H₂O₂ dans la phase aqueuse. La phase organique quittant l'unité d'extraction qui est alors recyclée à l'unité d'hydrogénation pour recommencer le cycle de production ne contient donc plus de stabilisant de l'H₂O₂ et doit donc faire l'objet d'un appoint de stabilisants frais avant de retourner à l'oxydation.

Dans l'unité de distillation, une quantité supplémentaire de stabilisants est aussi souvent ajoutée à l'eau utilisée pour former le reflux liquide de la colonne de rectification (brevet Etats-Unis US-3073755 au nom de LAPORTE CHEMICALS).

La grande majorité des stabilisants et des inhibiteurs de corrosion et acidifiants entrant dans l'unité de distillation étant relativement non volatils comparés à l'H₂O₂, se retrouvent dans la purge avec les impuretés éliminées en continu de l'unité de distillation.

Il a été trouvé que, de manière surprenante, cette purge rejetée jusqu'à présent de l'installation possédait de bonnes qualités résiduelles de stabilisation aptes à être utilisées dans l'unité d'oxydation.

L'invention concerne dès lors un procédé pour l'obtention de solutions aqueuses de peroxyde d'hydrogène selon le procédé aux alkylanthraquinones fournissant une solution aqueuse concentrée de peroxyde d'hydrogène à teneur réduite en impuretés selon lequel on procède à un appoint continu de composés acidifiants et de composés stabilisants consistant à recycler vers l'unité d'oxydation au moins une partie de la purge quittant l'unité de distillation.

La proportion de la purge recyclée vers l'unité d'oxydation dépend d'un grand nombre de facteurs parmi lesquels figurent les conditions de marche de l'installation, la nature et les concentrations en impuretés de la purge ainsi que son débit. Généralement, on recycle plus de 3 % du volume de la purge vers l'unité d'oxydation et, de préférence plus de 5 % de ce volume. Le plus souvent, on ne dépasse pas un taux de recyclage volumique de la purge de 95 % et, de préférence pas 90 % de ce taux. Un taux de recyclage volumique de la purge de 10 % a donné de bons résultats.

Par procédé aux alkylanthraquinones on entend désigner un procédé de production d'une solution aqueuse concentrée de peroxyde d'hydrogène consistant à hydrogéner une solution de travail organique d'au moins une alkylanthraquinone et/ou d'au moins une tétrahydroalkylanthraquinone pour produire une ou plusieurs anthrahydroquinones et/ou tétrahydroanthrahydroquinones alkylées. La solution de travail contenant la solution de (tétrahydro)anthrahydroquinones alkylées est ensuite soumise à oxydation au moyen d'oxygène, d'air ou d'air enrichi en oxygène pour fournir du peroxyde d'hydrogène et reformer les alkylanthraquinones et/ou tétrahydroanthraquinones alkylées. Le peroxyde d'hydrogène formé est ensuite séparé de la solution organique de travail au moyen d'une étape d'extraction par l'eau, le peroxyde d'hydrogène étant récupéré dans la phase aqueuse. La solution organique de travail contenant les (tétrahydro)alkylanthraquinones est ensuite recyclée à l'étape d'hydrogénation afin de recommencer le cycle de production de peroxyde d'hydrogène.

Par alkylanthraquinones, on entend désigner les 9,10-anthraquinones substituées en position 1,2 ou 3 par au moins une chaîne latérale alkyle de type aliphatique linéaire ou ramifiée comprenant au moins un atome de carbone. Habituellement, ces chaînes alkyles comportent moins de 9 atomes de carbone et, de préférence, moins de 6 atomes de carbone. Des exemples de telles alkylanthraquinones sont la 2-éthylanthraquinone, la 2-isopropylanthraquinone, les 2-sec- et 2-tert-butylanthraquinones, les 1,3-, 2,3-, 1,4- et 2,7-diméthylanthraquinones, les 2-iso- et 2-tert-amylanthraquinones et les mélanges de ces quinones.

Par alkylanthrahydroquinones, on entend désigner les 9,10-hydroquinones correspondantes aux 9,10-alkylanthraquinones explicitées ci-dessus.

Le procédé selon l'invention a pour objet de fournir des solutions aqueuses concentrées en peroxyde d'hydrogène à teneur réduite en impuretés. Il est bien adapté pour l'obtention de solutions aqueuses à teneurs réduites en matières organiques, c'est-à-dire contenant moins de 60 mg/kg (ppm) de matières organiques et, de préférence, moins de 30 mg/kg (ppm). Le procédé convient bien aussi pour réduire la teneur des impuretés inorganiques dans les solutions aqueuses de peroxyde d'hydrogène. Il est par exemple possible de l'utiliser pour réduire la teneur des matières inorganiques à une valeur comparable à celle des matières organiques ou même dans certains cas à des valeurs inférieures à celle des matières organiques.

Par composés acidifiants, on entend désigner des acides inorganiques destinés à maintenir le pH de la solution dans une zone acide. Les acides utilisés sont généralement choisis parmi les acides sulfurique, nitrique et phosphorique ou un mélange de deux ou plus de ces acides.

Les composés stabilisants selon l'invention sont en général des sels inorganiques de l'acide stannique et des acides contenant du phosphore tels que les stannates, les pyrophosphates, les métaphosphates et les polyphosphates de métaux alcalins. Par sels inorganiques, on entend désigner les composés dans lesquels tous les atomes d'hydrogène de l'acide correspondant ont été remplacés par un ou plusieurs atomes de métal aussi bien que les composés dans lesquels une partie seulement des atomes d'hydrogène de l'acide ont été remplacés par un ou plusieurs atomes de métaux et qui présentent encore le caractère acide.

Conformément à l'invention, on recycle au moins une partie de la purge quittant l'unité de distillation vers l'unité d'oxydation. Cette purge présente, avant dilution, une teneur en H₂O₂ d'environ 60 à 80 % en poids correspondant à environ 10 à 20 % en poids de la quantité totale de peroxyde d'hydrogène sortant de l'unité d'extraction et contient la majeure partie des impuretés. La quantité d'impuretés organiques dans la purge est généralement supérieure à 500 et parfois supérieure à 1000 mg/kg (ppm). La teneur en impuretés inorganiques de la purge est généralement supérieure à 1000 mg/kg (ppm) et souvent supérieure à 2000 mg/kg (ppm). Habituellement, elle est inférieure à 10000 mg/kg (ppm) et, le plus souvent, inférieure à 8000 mg/kg (ppm).

Pour des raisons de sécurité, un appoint en eau déminéralisée est pratiqué avant l'entrée dans l'unité de lavage de la purge, de façon à réduire d'environ 40 % la teneur de celle-ci en peroxyde d'hydrogène. Ceci a pour conséquence une réduction, dans la même proportion, des teneurs en impuretés.

Dans une variante du procédé selon l'invention, qui est préférée, on intercale un traitement d'épuration de la purge avant son recyclage à l'étape d'oxydation. Selon l'invention, ce traitement d'épuration peut consister en tout traitement destiné à diminuer la teneur de la purge en impuretés organiques.

Selon cette variante de l'invention, ce traitement d'épuration peut consister en un lavage de la purge au moyen d'un solvant polaire. Ce solvant doit présenter la propriété de n'être que faiblement soluble dans l'eau et les solutions aqueuses de peroxyde d'hydrogène. De tels solvants appartiennent généralement à la classe des alcools, des amides, des cétones, des alkylphosphates et des esters d'acides carboxyliques et phosphoriques et leurs mélanges. Le trioctylphosphate et les alcools aliphatiques ramifiés conviennent bien. Parmi ces alcools, le diisobutylcarbinol est particulièrement bien adapté.

Une variante à ce procédé d'épuration consiste à effectuer un lavage supplémentaire de la purge au moyen d'un solvant non polaire non miscible à l'eau de façon à éliminer les petites quantités de solvant polaire dissous lors de l'opération de lavage précédente.

Après lavage de la purge, le solvant polaire peut, de manière préférée, subir un traitement d'épuration destiné à le regénérer et permettre son recyclage à l'étape de lavage de la purge.

Ce traitement de régénération consiste, par exemple, à soumettre le solvant polaire à une séquence de plusieurs opérations de purification impliquant des extractions par de l'eau et la destruction de certaines impuretés organiques au moyen d'un réactif chimique compatible avec le solvant polaire. La séquence des trois étapes : extraction par l'eau, réaction avec une solution aqueuse d'un réactif alcalin suivie par un nouveau lavage au moyen d'eau a donné de bons résultats. La première étape d'extraction par l'eau a pour-but d'extraire la faible quantité de peroxyde d'hydrogène se trouvant à l'état dissous dans le solvant polaire. Ce peroxyde d'hydrogène peut lui aussi être récupéré et recyclé dans l'unité d'oxydation. La deuxième étape de réaction avec une solution aqueuse d'un réactif alcalin a pour but de détruire un certain nombre d'impuretés organiques telles que les peroxydes organiques et la troisième étape de lavage par l'eau d'extraire les produits de décomposition solubles générés à la deuxième étape ainsi que l'excès de réactif alcalin mis en oeuvre à cette étape. A titre de réactif alcalin, on peut mettre en oeuvre une solution aqueuse d'un hydroxyde de métal alcalin ou alcalino-terreux ou encore une solution aqueuse d'ammoniac. Une solution aqueuse d'hydroxyde de sodium 1 à 2 N à 80 °C a donné de bons résultats.

On peut améliorer l'épuration du solvant polaire en faisant suivre son traitement d'épuration décrit ci-dessus par un traitement d'adsorption des impuretés résiduaires qu'il contient encore. Ce traitement d'adsorption peut être choisi parmi un traitement d'adsorption sur une colonne garnie de charbon actif, d'alumine ou d'une résine échangeuse d'ions, par exemple un mélange d'une résine échangeuse de cations et d'une résine échangeuse d'anions ou encore un lit séparé contenant la résine échangeuse d'anions suivi ou précédé d'un lit de résine échangeuse de cations. On peut aussi remplacer le traitement d'adsorption des impuretés résiduaires par une séparation de celles-ci au moyen d'une opération de distillation ou d'entraînement à la vapeur. On peut également effectuer plusieurs étapes choisies parmi les traitements décrits ci-dessus.

Selon une variante préférée du procédé selon l'invention, on mélange une partie de la purge provenant de l'unité de distillation à la solution aqueuse brute de peroxyde d'hydrogène quittant l'unité d'extraction et on recycle le mélange à l'unité d'oxydation. Le peroxyde d'hydrogène produit est extrait du système au moyen d'un séparateur placé entre l'unité d'oxydation et d'extraction et qui a pour but de séparer une phase aqueuse brute contenant le peroxyde d'hydrogène produit d'avec la solution de travail organique afin de pouvoir diriger cette phase aqueuse brute vers l'étape de distillation où l'on en soutire une solution aqueuse concentrée épurée d'H₂O₂ et une purge contenant les impuretés qui est recyclée en partie vers l'unité d'oxydation. Le séparateur a pour fonction de séparer les phases aqueuses et organiques provenant de l'unité d'oxydation. L'unité d'extraction permet le transfert du peroxyde d'hydrogène généré dans l'unité d'oxydation au sein de la phase organique constituant la solution de travail, de cette phase organique vers une solution aqueuse brute qui sera ultérieurement épurée et concentrée pour obtenir le produit fini.

Les solutions aqueuses épurées et concentrées de peroxyde d'hydrogène produites au moyen du procédé selon l'invention présentent généralement une concentration en H₂O₂ supérieure à 50 % en poids et, le plus souvent, supérieure à 60 %. De même, ces solutions épurées contiennent généralement moins de 80 % en poids de H₂O₂ et, le plus souvent, moins de 75 %.

L'invention concerne aussi une installation pour la production de peroxyde d'hydrogène par le procédé aux alkylanthraquinones comportant une unité d'hydrogénation d'une solution de travail organique contenant les alkylanthraquinones en solution, une unité d'oxydation des hydroquinones produites dans l'unité d'hydrogénation, une unité d'extraction du peroxyde d'hydrogène de la solution de travail organique et une unité de distillation de la solution aqueuse brute de peroxyde d'hydrogène provenant de l'unité d'extraction, selon laquelle un laveur alimenté en solvant polaire reçoit la purge quittant l'unité de distillation, une première partie de la purge lavée est mélangée à la solution aqueuse brute quittant l'unité d'extraction et le mélange est recyclé à l'unité d'oxydation tandis que l'autre partie de la purge est recyclée à l'unité de distillation.

Selon l'invention, le solvant polaire quittant le laveur de la purge est épuré dans une unité d'épuration comprenant au moins un premier laveur au moyen d'eau, un réacteur alimenté par une solution aqueuse d'un réactif alcalin et au moins un dernier laveur au moyen d'eau.

Les laveurs des flux liquides utilisés dans le procédé selon l'invention peuvent être réalisés suivant toute technologie bien connue dans l'industrie chimique, par exemple, des colonnes d'extraction liquide-liquide à plateaux perforés ou à garnissage fonctionnant à contre courant ou des unités de lavage comportant une cuve parfaitement mélangée suivie d'un décanteur.

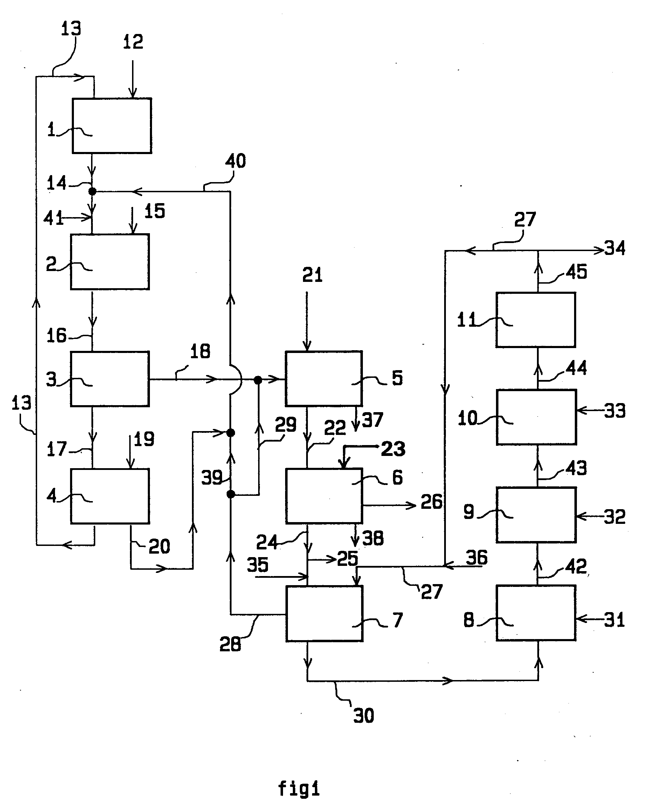

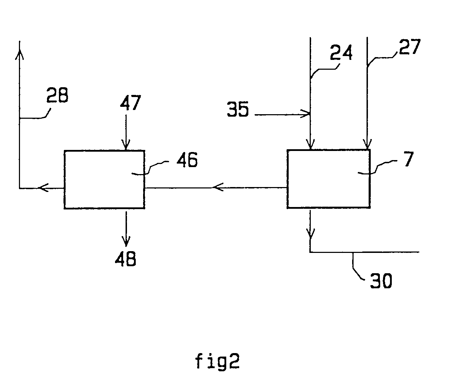

L'installation est par ailleurs explicitée avec plus de détails dans la description qui suit et qui se réfère aux figures 1 et 2 du dessin annexé donnant une représentation schématique d'une forme de réalisation préférée de l'installation selon l'invention.

L'installation comporte essentiellement une unité d'hydrogénation 1 alimentée en hydrogène gazeux 12 et avec la solution organique de travail contenant les alkylanthraquinones par la canalisation 13. La solution de travail hydrogénée contenant les alkylanthrahydroquinones quitte l'unité d'hydrogénation 1 par la canalisation 14 et entre dans l'unité d'oxydation 2 alimentée en air 15. Avant l'étape d'oxydation 2, la solution organique de travail de la canalisation 14 contenant les alkylanthrahydroquinones est mélangée via le conduit 40 avec la solution aqueuse brute recyclée en provenance des unités d'extraction 4 et de lavage 7. Après oxydation, le mélange de solution organique de travail et de solution aqueuse brute recyclée quitte l'unité d'oxydation 2 par la canalisation 16 et entre dans un séparateur 3 où l'on réalise la séparation de la phase organique quittant le séparateur 3 par la canalisation 17 d'avec la phase aqueuse quittant le séparateur par la canalisation 18. La canalisation 17 entre dans l'unité d'extraction 4 alimentée par ailleurs en eau pure via l'entrée 19. La solution aqueuse brute quittant l'unité d'extraction 4 et contenant le peroxyde d'hydrogène est recyclée à l'entrée de l'unité d'oxydation via les canalisations 20, 40 et 14. La solution organique de travail épuisée en peroxyde d'hydrogène quitte l'unité d'extraction 4 par la canalisation 13 et est ensuite recyclée à l'unité d'hydrogénation 1 pour y entamer un nouveau cycle de production.

L'unité d'extraction 4 peut consister en tout appareillage bien connu en lui même pour extraire un soluté d'un liquide au moyen d'un autre liquide non miscible dans le premier tels que, par exemple, des extracteurs centrifuges ou des colonnes d'extraction liquide-liquide fonctionnant à contre courant. Les colonnes d'extraction liquide-liquide sont préférées.

La solution aqueuse brute de peroxyde d'hydrogène quittant le séparateur 3 par la canalisation 18 est introduite dans un épurateur 5 alimenté en 21 par un solvant organique. Ce solvant organique est constitué d'au moins un solvant non polaire ou d'un mélange d'au moins un solvant non polaire et d'au moins un solvant polaire non miscible à l'eau. La canalisation 37 permet la sortie du solvant organique de l'épurateur 5. A titre de solvants non polaires, on peut employer, par exemple, un hydrocarbure ou un mélange d'hydrocarbures aliphatiques et/ou aromatiques éventuellement halogénés tels que le chlorure de méthylène ou les solvants de marque déposée SOLVESSO et SHELLSOL. Comme solvants polaires, on peut choisir, par exemple, un alcool ou un mélange d'alcools, un amide, un ester d'acide carboxylique ou phosphorique, un alkylphosphate ou un mélange d'au moins deux de ces solvants. Le diisobutylcarbinol convient bien.

La solution aqueuse brute épurée entre dans une unité de distillation 6 via la canalisation 22. Cette unité de distillation a pour but de concentrer la solution aqueuse brute de peroxyde d'hydrogène 22 et de séparer et concentrer une partie importante des impuretés qu'elle contient dans la purge 24. Cette unité comporte essentiellement un évaporateur qui alimente en vapeur le pied d'une colonne à distiller dans laquelle circule à contre courant un reflux liquide pratiqué en tête de colonne. La canalisation 38 permet l'échappement de la vapeur produite en tête de la colonne à distiller de l'unité de distillation 6. Cette unité de distillation 6 est également alimentée en eau pure 23 destinée à former le liquide de reflux de la colonne à distiller. La solution aqueuse de peroxyde d'hydrogène épurée et concentrée constituant la production de l'installation est soutirée de l'unité de distillation 6 par la canalisation 26. La purge quittant l'unité de distillation 6 par la canalisation 24 est en partie soutirée par la canalisation 25 et en partie dirigée vers l'unité de récupération et de lavage 7 alimentée en solvant polaire 27 après avoir été diluée au moyen d'eau pure via la canalisation 35.

La purge lavée quittant le laveur 7 par la canalisation 28 est ensuite séparée en deux courants, le premier courant 29 est recyclé dans la canalisation 18 qui alimente l'épurateur 5 précédant l'unité de distillation 6 et le deuxième courant 39 est mélangé à la solution aqueuse brute de peroxyde d'hydrogène quittant l'unité d'extraction 4 pour former le courant 40 qui est recyclé à l'unité d'oxydation 2.

Le solvant polaire chargé en impuretés extrait de l'unité de lavage 7 est envoyé par la canalisation 30 vers une unité de traitement et de récupération comportant une première étape de lavage 8 avec de l'eau pure entrant par la canalisation 31, puis, via la canalisation 42, vers le traitement dans un réacteur 9 avec une solution aqueuse de NaOH introduite via 32, d'extraction-lavage via la canalisation 43 dans le laveur 10 avec de l'eau pure introduite par la canalisation 33 et enfin de séparation des dernières impuretés via la canalisation 44 dans une unité d'adsorption 11 sur un solide adsorbant. Le solvant polaire traité est ensuite recyclé via les canalisations 45 et 27 à l'étape de lavage 7 de la purge de l'unité de distillation 6. Une purge de solvant polaire est également prévue par la canalisation 34. Cette purge peut être éliminée ou subir un traitement d'épuration en vue de récupérer le solvant qu'elle contient encore. De même, un appoint de solvant polaire frais peut aussi être réalisé par la canalisation 36.

Il est aussi possible, en plus du recyclage de la purge, de réaliser un appoint complémentaire de composés stabilisants et/ou acidifiants sous forme de produits frais. Cette variante, qui n'est pas préférée, se réalise en injectant directement ces composés dans au moins une des canalisations 41 (oxydation), 19 (extraction) et 23 (distillation).

Une variante de l'installation selon l'invention consiste à faire suivre l'unité de lavage de la purge 7 par un laveur supplémentaire 46 alimenté en solvant non polaire 47 pour récupérer la petite quantité de solvant polaire dissoute dans la phase aqueuse lors de l'opération de lavage précédente dans l'unité 7. Le solvant non polaire contenant la petite quantité de solvant polaire récupérée quitte le laveur 46 par la canalisation 48. Le solvant non polaire alimenté via la canalisation 47 ne doit pas être miscible à l'eau et peut être choisi de la même manière que celui utilisé dans l'épurateur 5 via la canalisation 21. Il est généralement avantageux que ces deux solvants non polaires soient choisis identiques.

## Revendications

1. Procédé pour l'obtention de solutions aqueuses de peroxyde d'hydrogène selon le procédé aux alkylanthraquinones fournissant une solution aqueuse concentrée de peroxyde d'hydrogène à teneur réduite en impuretés selon lequel on procède à un appoint continu de composés acidifiants et de composés stabilisants, caractérisé en ce que l'appoint est constitué par le recyclage vers l'unité d'oxydation de plus de 3 % du volume de la purge quittant l'unité de distillation et de 95 % au plus de ce volume.

2. Procédé selon la revendication 1, caractérisé en ce qu'on intercale un traitement d'épuration de la purge avant son recyclage à l'étape d'oxydation.

3. Procédé selon la revendication 2, caractérisé en ce que le traitement d'épuration consiste en un lavage de la purge avec un solvant polaire.

4. Procédé selon la revendication 3, caractérisé en ce que le solvant polaire est du diisobutylcarbinol.

5. Procédé selon la revendication 3 ou 4, caractérisé en ce que le solvant polaire est récupéré et recyclé à l'étape de lavage de la purge après avoir subi un traitement en au moins trois étapes consistant, dans l'ordre en au moins un lavage par de l'eau pour extraire la faible quantité de peroxyde d'hydrogène dissoute, un traitement par une solution aqueuse d'un réactif alcalin et au moins un lavage final par de l'eau.

6. Procédé selon la revendication 5, caractérisé en ce qu'après le dernier lavage à l'eau, on améliore l'épuration du solvant polaire au moyen d'un traitement comportant au moins une étape choisie parmi l'adsorption des impuretés résiduaires, la séparation de ces impuretés par distillation ou par entraînement à la vapeur.

7. Procédé selon l'une quelconque des revendications 1 à 6, caractérisé en ce que la purge provenant de l'unité de distillation est mélangée à la solution aqueuse brute de peroxyde d'hydrogène quittant l'unité d'extraction avant d'être recyclée à l'unité d'oxydation.

8. Procédé selon la revendication 7, caractérisé en ce que l'on sépare les phases organique et aqueuse quittant l'unité d'oxydation et que l'on envoie la phase aqueuse vers l'unité de distillation afin d'en soutirer la solution aqueuse épurée et concentrée de peroxyde d'hydrogène constituant le produit fini de la purge qui est recyclée dans l'unité d'oxydation.

9. Installation pour la production de peroxyde d'hydrogène par le procédé aux alkylanthraquinones comportant une unité d'hydrogénation d'une solution de travail organique contenant les alkylanthraquinones en solution, une unité d'oxydation des hydroquinones produites dans l'unité d'hydrogénation, une unité d'extraction du peroxyde d'hydrogène de la solution de travail organique et une unité de distillation de la solution aqueuse brute de peroxyde d'hydrogène produite, caractérisée en ce que la purge de l'unité de distillation est connectée sur un laveur qui est alimenté par une canalisation de solvant polaire et qui est équipé d'une canalisation de sortie divisée en deux canalisations, la première étant connectée sur l'entrée de l'épurateur de la solution aqueuse brute de peroxyde d'hydrogène précédant l'unité de distillation, la deuxième étant connectée sur la canalisation de sortie de la solution aqueuse brute de peroxyde d'hydrogène quittant l'extracteur, elle-même connectée à la canalisation d'entrée de la solution organique hydrogénée de l'oxydeur.

10. Installation selon la revendication 9, caractérisée en ce que la canalisation de solvant polaire quittant le laveur de la purge de l'unité de distillation est connectée sur une unité d'épuration comprenant, connecté entre eux, au moins un premier laveur recevant une canalisation d'entrée d'eau, un réacteur recevant une canalisation d'entrée d'une solution aqueuse d'un réactif alcalin et au moins un dernier laveur recevant une canalisation d'entrée d'eau.

## Claims

1. Process for obtaining aqueous hydrogen peroxide solutions by the alkylanthraquinone process, providing a concentrated aqueous hydrogen peroxide solution with a reduced content of impurities, according to which a continuous addition of acidifying compounds and/or of stabilising compounds is performed, characterised in that the addition consists in recycling towards the oxidation unit of more than 3 % of the volume of the purge leaving the distillation unit and of 95 % of this volume at the most.

2. Process according to Claim 1, characterised in that a treatment to purify the purge is inserted before it is recycled to the oxidation stage.

3. Process according to claim 2, characterised in that the purification treatment consists of a washing of the purge with a polar solvent.

4. Process according to Claim 3, characterised in that the polar solvent is diisobutylcarbinol.

5. Process according to Claim 3 or 4, characterised in that the polar solvent is recovered and recycled to the purge washing stage after having undergone a treatment in at least three stages consisting, in this order, of at least one washing with water to extract the small dissolved quantity of hydrogen peroxide, a treatment with an aqueous solution of an alkaline reactant and at least one final washing with water.

6. Process according to Claim 5, characterised in that after the last washing with water the purification of the polar solvent is improved by means of a treatment comprising at least one stage chosen from adsorption of the residual impurities and the separation of these impurities by distillation or by steam distillation.

7. Process according to any one of Claims 1 to 6, characterised in that the purge originating from the distillation unit is mixed with the crude aqueous hydrogen peroxide solution leaving the extraction unit before being recycled to the oxidation unit.

8. Process according to Claim 7, characterised in that the organic and aqueous phases leaving the oxidation unit are separated and that the aqueous phase is conveyed towards the distillation unit in order to draw off therefrom the purified and concentrated aqueous hydrogen peroxide solution constituting the finished product of the purge which is recycled to the oxidation unit.

9. Plant for the production of hydrogen peroxide by the alkylanthraquinone process, comprising a unit for hydrogenation of an organic working solution containing the alkylanthraquinones in solution, a unit for oxidising the hydroquinones produced in the hydrogenation unit, a unit for extraction of the hydrogen peroxide from the organic working solution and a unit for distilling the crude aqueous hydrogen peroxide solution produced, characterised in that the purge from the distillation unit is connected to a washer wich is fed by a pipework of polar solvent and which is equipped with an outflow pipework divided in two pipeworks, the first one being connected to the entrance of the purification unit of the crude aqueous solution of hydrogen peroxide leaving the extraction unit, connected itself to the entry pipework of the hydrogenated organic solution from the oxidation unit.

10. Plant according to Claim 9, characterised in that the polar solvent pipework leaving the washer of the purge from the distillation unit is connected to a purification unit comprising, connected to each other, at least a first washer which receives a water inlet pipework, a reactor which receives a pipework with an aqueous solution of an alkaline reagent and at least a last washer which receives a water inlet pipework.

## Patentansprüche

1. Verfahren zum Erhalt von wäßrigen Wasserstoffperoxid-Lösungen gemäß dem Alkylanthrachinon-Verfahren, das eine konzentrierte wäßrige Wasserstoffperoxid-Lösung mit vermindertem Gehalt an Verunreinigungen liefert, gemäß dem mittels kontinuierlichem Umlauf von säurebildenden Verbindungen und Stabilisatoren vorgegangen wird, dadurch gekennzeichnet, daß der Umlauf aus der Rückführung von mehr als 3% des Ablaufvolumens, das die Destillationseinheit verläßt, und von höchstens 95% dieses Volumens zur Oxidationseinheit besteht.

2. Verfahren gemäß Anspruch 1, dadurch gekennzeichnet, daß eine Reinigungsbehandlung des Ablaufs vor seiner Rückführung zur Oxidationsstufe engeschoben wird.

3. Verfahren gemäß Anspruch 2, dadurch gekennzeichnet, daß die Reinigungsbehandlung aus einer Wäsche des Ablaufs mit einem polaren Lösungsmittel besteht.

4. Verfahren gemäß Anspruch 3, dadurch gekennzeichnet, daß das polare Lösungsmittel Diisobutylcarbinol ist.

5. Verfahren gemäß Anspruch 3 oder 4, dadurch gekennzeichnet, daß das polare Lösungsmittel gesammelt und der Stufe der Ablaufwäsche wieder zugeführt wird, nachdem es einer Behandlung aus wenigstens drei Stufen unterworfen wurde, die, in dieser Reihenfolge, aus wenigstens einer Wäsche mit Wasser, um die geringe Menge an gelöstem Wasserstoffperoxid zu entfernen, einer Behandlung mit einer wäßrigen Lösung eines alkalischen Reagenzes und wenigstens einer Endwäsche mit Wasser bestehen.

6. Verfahren gemäß Anspruch 5, dadurch gekennzeichnet, daß nach der letzten Wäsche mit Wasser die Reinigung des polaren Lösungsmittels mittels einer Behandlung verbessert wird, die wenigstens eine Stufe umfaßt, die unter der Adsorption der Restverunreinigungen, der Abtrennung dieser Verunreinigungen durch Destillation oder durch Wasserdampfdestillation ausgewählt ist.

7. Verfahren gemäß einem der Ansprüche 1 bis 6, dadurch gekennzeichnet, daß der aus der Destillationseinheit stammende Ablauf mit der wäßrigen Rohlösung von Wasserstoffperoxid, die die Extraktionseinheit verläßt, gemischt wird, bevor er zur Oxidationseinheit zurückgeführt wird.

8. Verfahren gemäß Anspruch 7, dadurch gekennzeichnet, daß die organische und die wäßrige Phase, die die Oxidationseinheit verlassen, getrennt werden, und daß die wäßrige Phase zur Destillationseinheit geschickt wird, um daraus die gereinigte und konzentrierte wäßrige Wasserstoffperoxid-Lösung abzuziehen, die das Endprodukt des Ablaufs bildet, der in die Oxidationseinheit zurückgeführt wird.

9. Vorrichtung zur Herstellung von Wasserstoffperoxid durch das Alkylanthrachinon-Verfahren, die eine Einheit zur Hydrierung einer organischen Arbeitslösung, die die Alkylanthrachinone in Lösung enthält, eine Einheit zur Oxidation der in der Hydriereinheit erzeugten Hydrochinone, eine Einheit zur Extraktion des Wasserstoffperoxids aus der organischen Arbeitslösung und eine Einheit zur Destillation der wäßrigen Rohlösung des hergestellten Wasserstoffperoxids umfaßt, dadurch gekennzeichnet, daß der Ablauf der Destillationseinheit mit einem Wäscher verbunden ist, der mit einer Leitung für das polare Lösungsmittel gespeist wird, und der mit einer Ableitung ausgerüstet ist, die in zwei Leitungen geteilt ist, wobei die erste mit dem Eingang des Reinigers für die wäßrige Rohlösung des aus der Destillationseinheit stammenden Wasserstoffperoxids verbunden ist, und wobei die zweite mit der Ableitung der wäßrigen Rohlösung des Wasserstoffperoxids, die den Extraktor verläßt, verbunden ist, die selbst mit der Zuleitung für die hydrierte organische Lösung des Oxidators verbunden ist.

10. Vorrichtung gemäß Anspruch 9, dadurch gekennzeichnet, daß die Leitung für das polare Lösungsmittel, das den Ablaufwäscher der Destillationseinheit verläßt, mit einer Reinigungseinheit verbunden ist, die, untereinander verbunden, wenigstens einen ersten Wäscher, der eine Zuleitung für Wasser empfängt, einen Reaktor, der eine Zuleitung für eine wäßrige Lösung eines alkalischen Reagenzes empfängt, und wenigstens ein letzter Wäscher, der eine Zuleitung für Wasser empfängt, umfaßt.
